# EUROPEAN PATENT APPLICATION

(11) **EP 1 457 721 A1**
(43) Date of publication of application: **15.09.2004**
(21) Application number: 04100985.3
(22) Date of filing: 10.03.2004
(51) Int. Cl.: F16K 31/04, F02D 9/02, F02D 11/10

(54) **Throttle unit for internal combustion engines**

(30) Priority: 13.03.2003 IT MI20030482
(71) Applicant: DELL'ORTO S.P.A., I-20038 Seregno Milano (IT)
(72) Inventor: Dell'Orto, Pierluigi, 20045 Besana Brianza (Milano) (IT); Grassia, Pasquale, 80020 Crispano (Napoli) (IT)
(74) Representative: Vatti, Paolo, Dr. Ing.

(57) **Abstract**

The invention relates to a throttle unit for internal combustion engines, particularly for vehicles, of the type comprising a throttle (12), capable of taking up a blow-by position (TR), a position corresponding to the normal engine idling condition, a fully-open position (WOT), a plurality of intermediate positions between the previous ones and a "limp home" position (LH), and in which the shaft (11) of the throttle (12) is controlled by an electric motor (10) through a mechanical transmission equipped with a sprocket gear reduction unit (13, 14). According to the invention, the transmission from the sector gear (14) to the shaft (11) of the throttle (12) consists of an articulated quadrilateral kinematic mechanism (15), the dead-centre condition of which corresponds to the throttle blow-by position, there being further provided a spring (19) opposing the rotations imparted by the motor (10) to the sector gear (14) to bring the throttle (12) towards the fully-open position (WOT).

## Description

The present invention relates to a throttle unit for internal combustion engines, especially for vehicles, of the type controlled by an electric motor and comprising a "limp home" device.

It is known that current technology has been searching for more and more advanced technical solutions to reduce exhaust emissions by modern internal combustion engines, particularly by those intended to be mounted on vehicles, in order to make such engines compatible with current and future anti-pollution rules and regulations. Within the frame of this problem, control systems of the engine running speed have established themselves more and more, which provide to adopt motorised throttle units which may be electronically controlled. As a matter of fact, the possibility of suitably adjusting the opening, the intermediate positions and the closing of the throttle valve has led to remarkable advantages, allowing a considerable reduction of exhaust emissions by motor vehicles, especially during transition phases (in terms of pollutant control, engine speed transitions are in fact unfavourable conditions as far as engines are concerned).

However, the introduction of the above-mentioned servo-mechanisms entails, when the engine is mounted on a vehicle, problems for which a solution is required:
- to guarantee the running of the vehicle engine in case of failure of the electric motor operating the throttle valve (with the provision of a "limp home" device);
- to obtain a command reaction which is sufficiently accurate for the throttle positions in proximity of the smallest opening position, where system sensitivity is high;
- to guarantee a high operating speed in proximity of the throttle fully-open position.

With particular reference to the first problem, it is necessary to provide that, in case of power supply to the electric motor being discontinued, the system mechanically and automatically positions the throttle in an accelerated slow running condition just sufficient to keep the vehicle moving.

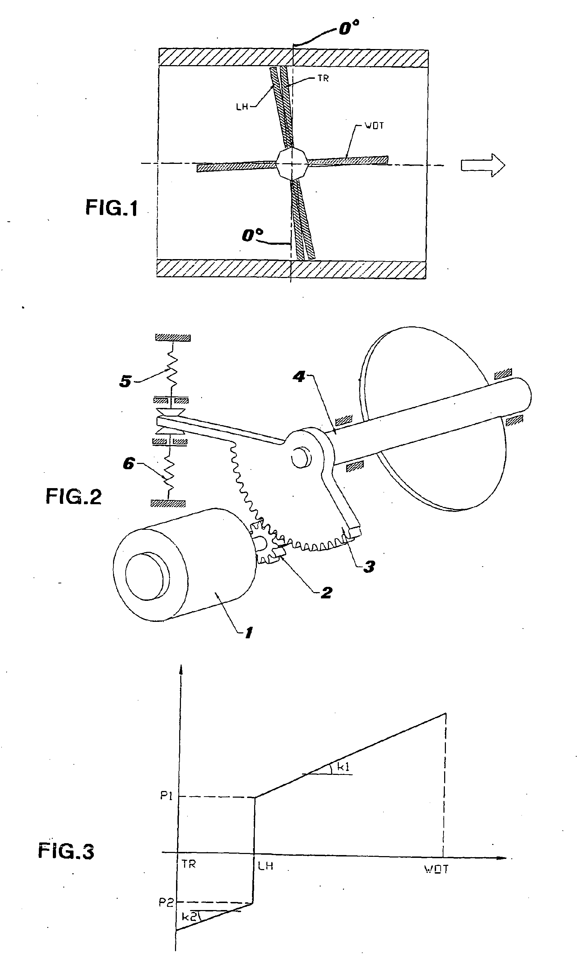

With reference to fig. 1 of the attached drawings, some specific positions can be determined, which will often be referred to in the following:
- a zero position (0°) corresponding to the plane perpendicular to the duct passing through the throttle valve rotation axis;
- a blow-by position TR corresponding to a position of the throttle (which is elliptical and not circular as the duct section) "nearly resting" onto the duct (with an inclination of about 6° to said zero plane);
- a position, usually variable by a small degree, more open by a few degrees than the previous blow-by position (but in any case less open than the "limp home" position defined in the following), corresponding to the normal idling condition of the engine (and not shown in the attached drawings);
- a "limp home" position LH, wherein the throttle is very little open (by about 12° to the zero plane), corresponding to a condition of accelerated slow running speed, which in emergency conditions allows the running of the engine and of the vehicle equipped with it;
- a fully-open WOT position (next to 90° to the zero plane).

In standard technical practice, the "limp home" condition is obtained by various means mostly derived from a single operating principle represented in an extremely simplified way in fig. 2 of the attached drawings: an electric motor 1 operates, by means of a suitable reduction unit (generally comprising a sprocket gear 2 and a sector gear 3), the throttle shaft 4, against the bias offered by a pair of pre-loaded springs 5 and 6. In particular spring 5 operates in the angle range of the throttle, which extends from the emergency position LH to that of full WOT, while the spring 6 operates in the remaining portion of the run, from the blow-by position TR to the emergency or "limp home" position LH, in which a suitable stopping system (not shown)is provided to neutralise it.

In this case the return force is shown in fig. 3 of the attached drawings. As can be seen, in the position LH the system has a load discontinuity, due to the change of the spring, equivalent to the sum of the applied preloads. In the quick operation from the position of full WOT to that of minimum TR and viceversa, such discontinuity may cause mechanical problems, such as impacts, vibrations and the like.

With the above-described system, the presence of the aforementioned discontinuity is not removable, since adopting non-preloaded springs to bring the assembly back into the LH position, the positioning thereof would be uncertain due to the frictions which are inevitably present in any mechanical transmission.

Throttle units are also known, for example from DE-A1-4039937 and from USA-6089208, which use, to control the throttle valve, pivoting arm systems directly operated by an electric motor, against the bias of a spring. Both these devices, however, do not exploit a sprocket and sector gear reduction unit to reduce the revolutions of the operating motor, which causes noticeable disadvantages from a manufacturing and functional point of view (requiring the use of more powerful and hence bulkier motors, which are further badly exploited due to the low number of revolutions during normal working conditions).

Moreover, in the conventional technology, the choice of the transmission ratio between motor and throttle shaft is a compromise between a good modular capability near the slow running condition (where, small angle variations of the throttle correspond to large flow variations of the supplied mixture) and the requirement of a high operation speed near the maximum condition (where large angle variations of the throttle correspond to small flow variations).

The above-described problems are overcome by the present invention, which relates to a throttle unit for internal combustion engines, of the type comprising a throttle capable of taking up a blow-by position, a position corresponding to the normal engine idling condition, a fully-open position, a plurality of intermediate positions between the previous ones and a "limp home" position and in which the throttle shaft is controlled by an electric motor through a mechanical transmission comprising a sprocket and sector gear reduction unit, characterised in that the transmission from the sector gear to the throttle shaft consists of an articulated quadrilateral kinematic mechanism, the dead-centre condition of which corresponds to the throttle blow-by position, and in that a single spring is provided which opposes the rotations imparted by the motor to the sector gear in order to draw the throttle towards the fully-open position.

Preferably, in said throttle unit, the articulated quadrilateral kinematic mechanism comprises: a connecting rod with one end having its fulcrum on the sector gear, said fulcrum and a crank which connects the throttle shaft to the other end of the connecting rod. Within it, the rotation centres of the sector gear and of the ends of the connecting rod are aligned in the dead-point condition corresponding to the throttle blow-by position.

To take up the slack of the articulated quadrilateral kinematic mechanism, a second spring can be provided, keyed for example on the throttle shaft, which operates in an opposite direction to said return spring, but imparting a noticeably smaller action than the same.

To control the throttle unit, the invention provides an electronic control system of the electric motor, comprising, in a known manner, a position computing unit and a power unit, the control programme of said system being processed according to an algorithm which takes into account the variableness of the transmission ratio between the electric motor and the throttle, produced by said articulated quadrilateral kinematic mechanism. According to the invention, the programme controlling said electronic system provides that, during normal functioning, the throttle can never exceed the blow-by position. Thus, during normal conditions, the throttle cannot move into the "limp-home" position rotating in the direction it does instead when failure occurs.

The invention will now be described in greater detail, as a non-limiting example, with reference to one of its currently preferred embodiments and to the accompanying drawings, wherein:
fig. 1 diagrammatically illustrates a throttle unit according to the prior art, of the type already described, which the present invention refers to;
fig. 2 illustrates drive means according to the prior art of the throttle unit of fig. 1;
fig. 3 is a diagram representing the law of the variation of the return bias imparted by the springs of the known means of fig. 2, as a function of the opening angle of the throttle valve;
fig. 4 illustrates the drive means of the throttle unit according to the invention;
figs. 5, 6, 7, and 8 represent four different operating conditions of the control device of fig. 4;
fig. 9 is a diagram which represents the law of variation of the throttle opening angle as a function of the angle shifts of the sector gear of the transmission which controls it (continuous line), as well as the transmission ratio between the shafts of said sector gear and throttle (dotted line); and
fig. 10 is a block diagram which illustrates an electronic control system of the electric motor operating the throttle unit according to the invention.

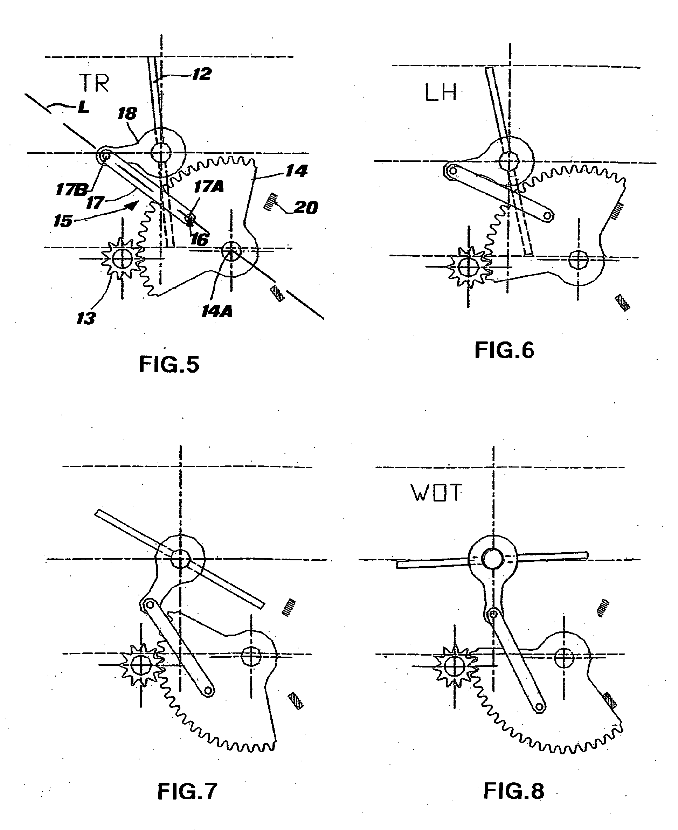

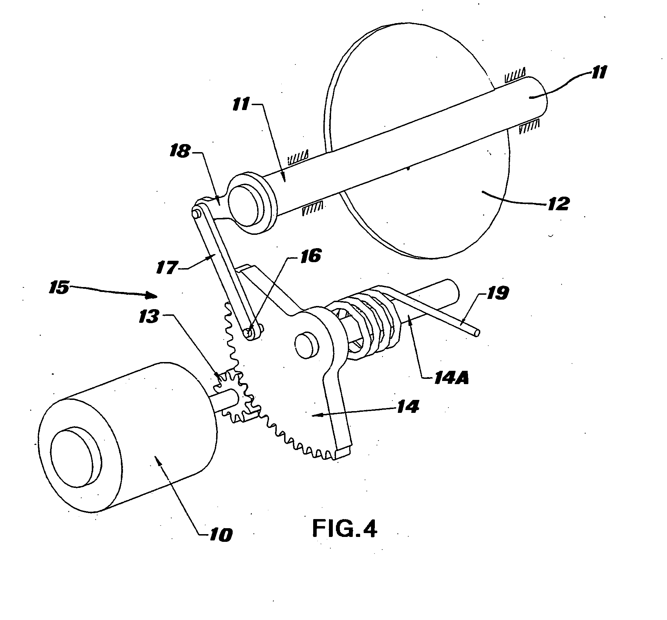

With reference to figs. 4 to 8 of the attached drawings, as well as to fig. 1, it can be seen that the device of the present invention has a transmission of the drive from the electric motor 10 to the shaft 11 of the throttle 12 which comprises a suitable reduction unit with sprocket 13 and sector gear 14 and an articulated quadrilateral kinematic mechanism 15 consisting of a fulcrum 16 on the sector gear 14, of a small connecting rod 17 and of a crank 18 which acts on the shaft 11 of the throttle 12. It is further provided a return spring 19 acting on the shaft 14A of the sector gear.

In this device according to the invention, the "limp home" position of the throttle 12 is automatically reached, in the case of failure of the motor 10, by exploiting the property of inversion of the motion of the shaft 11 of the throttle 12 beyond the dead-centre of the articulated quadrilateral kinematic mechanism 15 of the device itself.

As a matter of fact, as can be seen from fig. 5, the mechanism is assembled so that, in correspondence of the TR position of the throttle 12, the centre of rotation 14A of the sector gear 14 is aligned - discontinuous line L - with the rotation centres of end 17A (coinciding with the fulcrum 16) and 17B (pivoted to the crank 18), respectively, of the connecting rod 17.

In these conditions - which are the dead-centre conditions of the articulated quadrilateral kinematic mechanism 15 - both when the sector gear 14 is rotated clockwise (towards the position of fig. 6), and when it is rotated anti-clockwise (towards the intermediate position of fig. 7), the throttle will always move toward more open positions ("limp home" position LH and intermediate position between that of blow-by TR and that of full WOT, respectively).

The range of normal working conditions of the throttle unit is that ranging from the position of fig. 5, through the position of fig. 7 to the position of maximum opening WOT of fig. 8 and viceversa, with anti-clockwise and clockwise rotations, respectively, of the sector gear 14 controlled to open (acceleration) and to close (deceleration) by the motor 10 controlled, through a potentiometer (see further on), by the vehicle accelerator.

For the mechanism according to the invention as described and illustrated it is sufficient a single return spring 19 applied to the shaft 11 of the sector gear 14, which - suitably preloaded during mounting - always acts in a clockwise direction, opposing the rotations of the electric motor 10 which control the throttle opening. In case of failure of the electric motor 10, this spring 19 in fact brings the system back from any position of the range of normal working conditions to the LH position, thanks to the accumulated elastic energy. Obviously, in order to steadily achieve the emergency position LH, the system will go through the blow-by position TR where the throttle first stops its motion (in correspondence of the dead-centre of the kinematic mechanism 15) in order to then reverse its rotation direction and reopen up to the LH position of fig. 6.

For the above-mentioned mechanism the "limp home" position is determined by an end stop, identified by the reference number 20, and is hence inherently accurate. Furthermore, within the normal functioning range there is a complete lack of impacts and of vibrations which may occur with conventional devices, caused by the load discontinuities which were produced by the passages from the control with one to that with the other of the two springs of such devices.

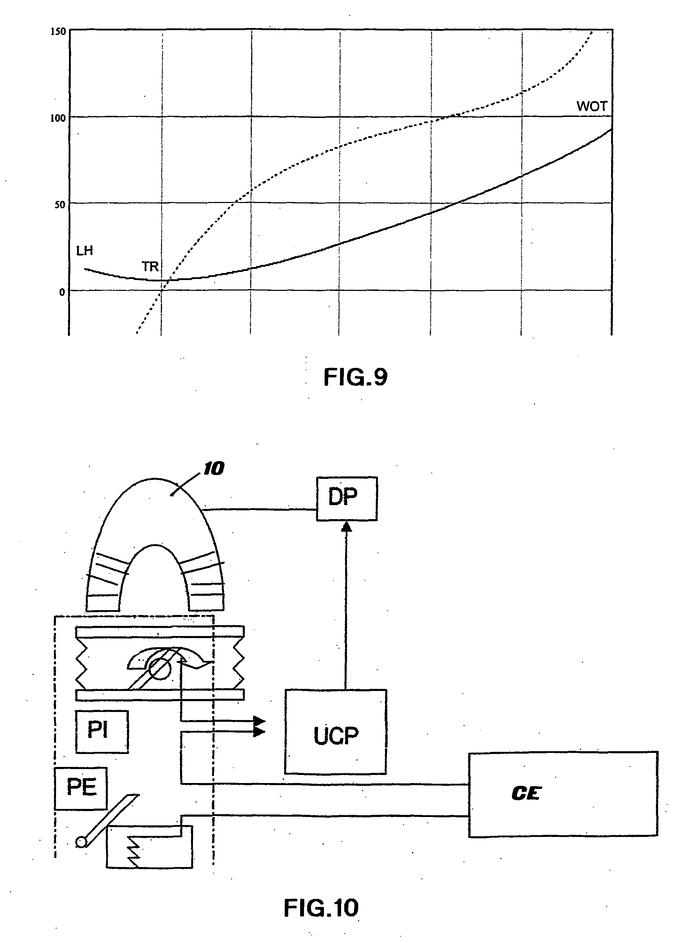

In fig. 9 are illustrated the angular positions of the throttle 12 as a function of the angular displacements of the sector gear 14 of the transmission between the electric motor 10 and the shaft 11 of the same throttle 12 (continuous line) as well as the transmission ratio between the shaft 11 of the throttle 12 and the shaft 14A of the sector gear 14 (dotted line).

With reference to the first curve (continuous line) it can be noticed that, consistently with what has been disclosed above, beginning from the WOT position (fig. 8), the throttle first closes up to the TR position, and then reopens until it reaches the LH position.

With reference to the second curve (dotted line) it can be further verified that, assuming a constant speed of the electric motor, the shaft 11 of the throttle 12 rotates very slowly in proximity of the blow-by position TR (transmission ratio close to zero) and progressively accelerates towards the full WOT position, with a transmission ratio increasing to over one. This guarantees that both the set objects are achieved, that is, the achievement of a good progression of the control with small loads and a high operating speed with high loads.

It must not be forgotten that all these results are achieved, in the throttle unit according to the invention, also due to the fact that the throttle valve drive is obtained thanks to the combination - never accomplished before - of a leverage (articulated quadrilateral kinematic mechanism 15) which controls the valve 12, with a sprocket and sector gear reduction unit 13, 14 operated by an electric motor 10. This allows, among other things, to use smaller electric motors, featuring reduced power and torque, with substantial advantages in a device such as the throttle unit, of which compactness and lightness are essential features. Costs are thereby also reduced and reliability and duration of the device are increased, since the engine operating it performs a larger number of revolutions during normal working conditions and is therefore better exploited, especially as far as brush use is concerned.

Finally, it must be remembered that the system may be improved by adding another spring on the shaft 11 of the throttle 12, in order to take up any slack present in the articulated quadrilateral transmission.

It may be appropriate to outline how the throttle unit according to the invention is controlled, in view of the particular arrangement of the control means it employs.

As illustrated in fig. 10, a system is used which consists of a position computing unit UCP and of a power unit DP for the motion of the motor 10, and which is associated to the vehicle electric control unit CE.

The UCP unit processes the external position signal PE, determined by the position of the accelerator, the inner signal of the throttle position PI and the power driver DP for the operation of the motor 10, as illustrated in fig. 10 of the attached drawings.

Upon starting, the UCP unit - through the control of the motor always in the same direction - brings the throttle from the "limp home" position LH (in which it finds itself with the motor switched off), inclined by about 12° to the zero plane, to the blow-by position TR, inclined by about 6°, corresponding to the lowest potentiometer voltage and it then causes it to increase up to the position of full WOT, inclined by about 92°, to which corresponds, in the control system, a voltage set in the programme; it then brings back the throttle 12, reversing the direction of rotation of the motor 10, to an engine idling position (between that of "limp home" LH and that of blow-by TR) to which corresponds in the potentiometer a voltage set in the programme according to external parameters, such as room temperature, engine temperature, and any auxiliary loads on the engine possibly present.

The initial increase allows to update to the current conditions the motion law produced by the electric motor 10, to then have the throttle 12 reach the positions required by the driver through the accelerator control.

Any variation of the external position signal PE informs the UCP unit that it must cause the throttle 12 to reach a new position, which is calculated taking into account all the variables which concur to its correct determination, in form of the modulus and sign difference of the two signals PI-PE. The sign is used to determine the direction of rotation of the motor 10, the modulus is used to establish the position correction ratio, and the approach damping (ramp) is chosen to guarantee the absence of oscillations of the throttle 12 about the desired position.

The control system also provides means to inform the UCP unit of an approach to the blow-by position TR - inclination of the throttle by about 6° to the zero plane - the exceeding of which would mean entering the forbidden position range in normal working conditions; the information "TR position reached" activates a control loop of the electronic circuit for the maintenance of said position. PE values below those corresponding to the blow-by position TR (6° to the zero plane) or above those corresponding to the full WOT position (92° to the zero plane) are not accepted, to avoid throttle impacts due to reached mechanical limit.

It must be added that, to obtain a suitable control and at the same time an appropriate response rate, it is necessary for the programme - according to which the above-described electronic system works - to be processed according to an appropriate algorithm which takes into account the mechanical features of the device according to the invention, such as for example the load asymmetry due to the return spring, and above all the variableness of the transmission ratio between electric motor and throttle which the original articulated quadrilateral kinematic mechanism of the device itself produces.

It is also understood that other practical embodiments of the system according to the invention which fall fully within the scope of the present invention can differ from that described in detail above.

## Claims

1. Throttle unit for internal combustion engines, particularly for vehicles, of the type comprising a throttle (12) capable of taking up a blow-by position (TR), a position corresponding to the normal engine idling condition, a fully-open position (WOT), a plurality of intermediate positions between the above-said ones and a "limp home" position (LH), and in which the shaft (11) of the throttle (12) is controlled by an electric motor (10) through a mechanical transmission comprising a sprocket and sector gear reduction unit (13, 14), **characterised in that** the transmission from the sector gear (14) to the shaft (11) of the throttle (12) consists of an articulated quadrilateral kinematic mechanism (15), the dead-centre condition of which corresponds to the throttle blow-by position, and **in that** a single spring (19) is provided to oppose the rotations imparted by the motor (10) to the sector gear (14) drawing the throttle (12) towards the fully-open position (WOT).

2. Throttle unit as claimed in claim 1), wherein said articulated quadrilateral kinematic mechanism (15) comprises: a connecting rod (17) with one end (17A) having its fulcrum (16) on the sector gear (14), said fulcrum (16) and a crank (18) which connects the throttle shaft (11) to the other end (17B) of the connecting rod (17).

3. Throttle unit as claimed in claims 1) and 2), wherein the rotation centres of the sector gear (14) and of the ends of the connecting rod (17) are aligned in the dead-centre condition of said articulated quadrilateral kinematic mechanism (15) corresponding to the throttle blow-by position.

4. Throttle unit as claimed in claims 1) to 3), wherein said spring (19) is a cylindrical helical spring wound onto the shaft (14A) of the sector gear (14).

5. Throttle unit as claimed in claims 1) to 4) further comprising a second spring acting in a direction opposite to said opposing spring (19), imparting a considerably smaller action than the latter.

6. Throttle unit as claimed in claim 5), wherein said second spring consists of a cylindrical helical spring wound onto the shaft (11) of the throttle (12).

7. Throttle unit as claimed in claims 1) to 6), wherein the electric motor (10) is controlled by an electronic system comprising a position computing unit (UCP) and a power unit (DP), the control programme of said system being processed according to an algorithm which takes into account the variableness of the transmission ratio between the electric motor (10) and the throttle (12) produced by said articulated quadrilateral kinematic mechanism (15).

8. Throttle unit as claimed in claim 7), wherein the programme of said electronic control system also provides for the throttle (12), in normal working conditions, to never be apt to exceed the blow-by position (TR).
